# EUROPEAN PATENT APPLICATION

(11) **EP 4 451 660 A1**
(43) Date of publication of application: **23.10.2024**
(21) Application number: 23207340.3
(22) Date of filing: 02.11.2023
(51) Int. Cl.: H04N 1/00, H04N 1/23, H04N 1/32

(54) **INFORMATION PROCESSING SYSTEM AND IMAGE FORMING SYSTEM**

(30) Priority: 20.04.2023 JP 2023069493
(71) Applicant: FUJIFILM Business Innovation Corp., Minato-ku Tokyo (JP)
(72) Inventor: YAMAGUCHI, Megumi, Yokohama-Shi (JP); NOGUCHI, Daisuke, Yokohama-shi (JP); NAKAYAMA, Hiroyoshi, Yokohama-shi (JP); KAWABE, Masatake, Yokohama-shi (JP)
(74) Representative: Kurig, Thomas

(57) **Abstract**

An information processing system includes a processor configured to receive information regarding a first threshold, and cause, based on information regarding a rejection ratio which is a ratio of printed matters not satisfying a printing criterion each image forming apparatus has and the first threshold value, the image forming apparatus in which the rejection ratio is equal to or less than the first threshold value to execute a printing operation.

## Description

### BACKGROUND OF THE INVENTION

### (i) Field of the Invention

The present invention relates to an information processing system and an image forming system.

### (ii) Description of Related Art

An information processing apparatus of JP2022-124834A has an acquisition unit that acquires a color verification result of a printed matter by an image forming apparatus periodically, in response to a request, or both, from a saving unit that saves a color measurement result of the printed matter by the image forming apparatus, and an execution unit that causes the image forming apparatus performing instructed image formation to execute the instructed image formation in a case where the color verification result satisfies a criterion.

### SUMMARY OF THE INVENTION

An object of the present invention is to hardly generate a printed matter that does not satisfy a printing criterion required by a printing requester, as compared with a case where a printed matter is generated by using all of a plurality of image forming apparatuses.

According to a first aspect of the present disclosure, there is provided an information processing system including a processor configured to receive information regarding a first threshold value, and cause, based on information regarding a rejection ratio which is a ratio of printed matters not satisfying a printing criterion each image forming apparatus has and the first threshold, the image forming apparatus in which the rejection ratio is equal to or less than the first threshold value to execute a printing operation.

According to a second aspect of the present disclosure, there is provided the information processing system according to the first aspect, in which the printing criterion includes a plurality of criteria whose content is different from each other, and the processor is configured to cause, based on the information regarding the rejection ratio corresponding to at least one selected criterion and the first threshold value, the image forming apparatus in which the rejection ratio is equal to or less than the first threshold value to execute the printing operation.

Further, according to a third aspect of the present disclosure, there is provided the information processing system according to the first aspect or the second aspect, in which the plurality of criteria includes a tint criterion and a blurring criterion.

Further, according to a fourth aspect of the present disclosure, there is provided the information processing system according to the first aspect to third aspects, in which the printing criterion includes at least one of a tint criterion, a blurring criterion, or a printing position criterion.

Further, according to a fifth aspect of the present disclosure, there is provided the information processing system according to any one of the first to fourth aspects, in which the processor is configured to cause, in a case where the information regarding the first threshold value is input by using an input device, a display unit to display the input information regarding the first threshold value.

Further, according to a sixth aspect of the present disclosure, there is provided the information processing system according to any one of the first to fifth aspects, in which the processor is configured to cause, in a case where information regarding a second threshold value having the rejection ratio larger than the first threshold value is input by using the input device, the display unit to display the input information regarding the second threshold value.

Further, according to a seventh aspect of the present disclosure, there is provided the information processing system according to any one of the first to sixth aspects, in which the processor is configured to recognize the image forming apparatus having the rejection ratio equal to or larger than the second threshold value as a specific image forming apparatus.

Further, according to an eighth aspect of the present disclosure, there is provided the information processing system according to any one of the first to seventh aspects, in which the processor is configured to cause the display unit to display information regarding the specific image forming apparatus.

Further, according to a ninth aspect of the present disclosure, there is provided the information processing system according to any one of the first to eighth aspects, in which the processor is configured to receive information regarding a determination result from a determination apparatus that determines whether or not the printed matters satisfy the printing criterion, and the information regarding the determination result is the information regarding the rejection ratio or information in which the processor is configured to calculate the information regarding the rejection ratio.

Further, according to a tenth aspect of the present disclosure, there is provided an image forming system including the information processing system according to any one of the first to ninth aspects, a plurality of the image forming apparatuses configured to execute the printing operation, and a determination apparatus that determines whether or not the printed matters satisfy the printing criterion and that transmits a determination result to the information processing system.

According to the first aspect of the present invention, the printed matter that does not satisfy the printing criterion required by the printing requester is hardly generated, as compared with a case where the printed matter is generated by using all of the plurality of image forming apparatuses.

According to the second aspect of the present invention, the content of the printing criterion is caused to easily match the content required by the printing requester, as compared with a case where the printing criterion includes only one criterion.

According to the third aspect of the present invention, the contents of the printing criteria related to the tint criterion and the blurring criterion are caused to easily match the content required by the printing requester, as compared with a case where the printing criterion does not include the tint criterion and the blurring criterion.

According to the fourth aspect of the present invention, the content of the printing criterion related to at least one of the tint criterion, the blurring criterion, or the printing position criterion is caused to easily match the content required by the printing requester, as compared with a case where the printing criterion does not include the tint criterion, the blurring criterion, and the printing position criterion.

According to the fifth aspect of the present invention, the printing requester can set the magnitude of the first threshold value and can recognize the set magnitude of the first threshold value.

According to the sixth aspect of the present invention, the printing requester can set the magnitude of the second threshold value larger than the first threshold value and can recognize the set magnitude of the second threshold value.

According to the seventh aspect of the present invention, the image forming apparatus in which the rejection ratio is equal to or larger than the second threshold value can be specified.

According to the eighth aspect of the present invention, the printing requester can recognize the specific image forming apparatus.

According to the ninth aspect of the present invention, the burden on the operator is reduced, as compared with a case where the operator inputs the information regarding the rejection ratio using the input device connected to the processor.

According to the tenth aspect of the present invention, the printed matter that does not satisfy the printing criterion required by the printing requester is hardly generated, as compared with a case where the printed matter is generated by using all of the plurality of image forming apparatuses.

### BRIEF DESCRIPTION OF THE DRAWINGS

Exemplary embodiment(s) of the present invention will be described in detail based on the following figures, wherein:
Fig. 1 is an overall configuration diagram of an image forming system according to the present exemplary embodiment;
Fig. 2 is a control block diagram of a hardware configuration of a server and an inspection apparatus;
Fig. 3 is a functional block diagram of the server;
Fig. 4 is a schematic diagram of a display device;
Fig. 5 is a diagram showing an NG rate list recorded in a storage of the server;
Fig. 6 is a block diagram schematically showing a configuration of a printing apparatus;
Fig. 7 is a functional block diagram of the inspection apparatus;
Fig. 8 is a flowchart representing processing executed by a CPU of the server;
Fig. 9 is a flowchart representing processing executed by a CPU of the inspection apparatus; and
Fig. 10 is a schematic diagram of a display device of a modification example.

### DETAILED DESCRIPTION OF THE INVENTION

Hereinafter, exemplary embodiments of the invention will be described in detail with reference to the drawings.

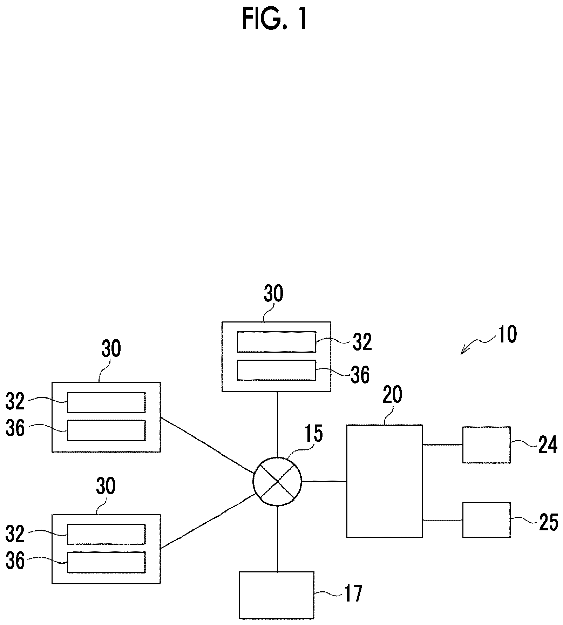

As shown in Fig. 1, an image forming system 10 of the present exemplary embodiment includes an operation terminal 17, a server (information processing system) 20, an input device 24, a display device (display unit) 25, and a plurality of printing units 30. The operation terminal 17 and the printing unit 30 of the present exemplary embodiment are installed in a building (not shown) in which an office of a printing company is provided. Further, the input device 24 and the display device 25 are electrically connected to the server 20, and the server 20, the input device 24, and the display device 25 are installed in a building (not shown) different from the above building. The operation terminal 17, each printing unit 30, and the server 20 are connected to be able to communicate with each other via a wired or wireless communication line 15 such as the Internet or a local area network (LAN). Hereinafter, each part of the image forming system 10 will be described.

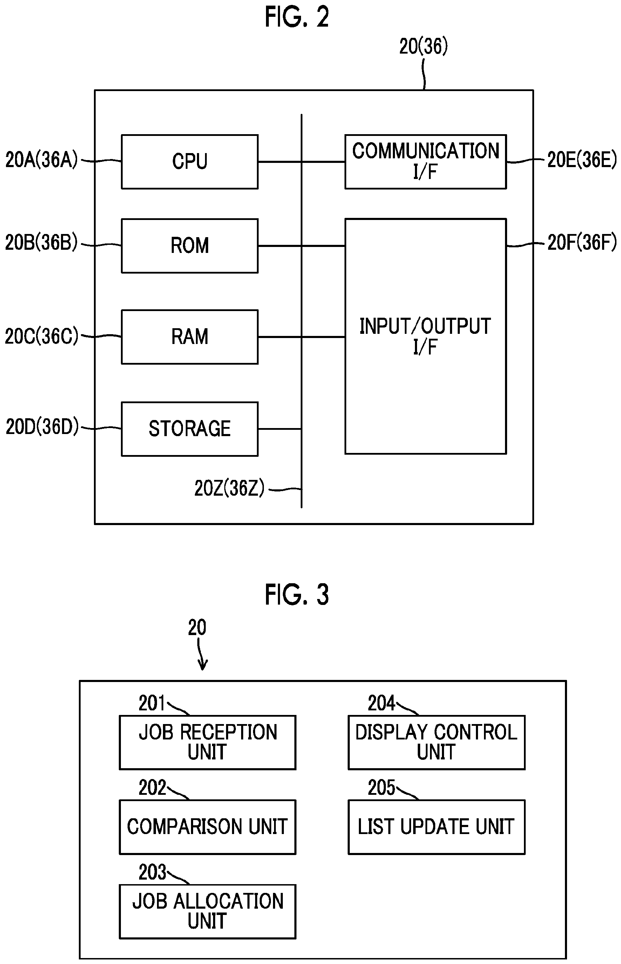

As shown in Fig. 2, the server 20 is configured to include, as a hardware configuration, a central processing unit (CPU) 20A, a read only memory (ROM) 20B, a random access memory (RAM) 20C, a storage 20D, and a communication interface (I/F) 20E, and an input/output I/F 20F. The CPU 20A, the ROM 20B, the RAM 20C, the storage 20D, the communication I/F 20E, and the input/output I/F 20F are connected to be able to communicate with each other via a bus 20Z.

The CPU 20A is a central calculation processing unit, and executes various programs or controls each part. That is, the CPU 20A reads out a program from the ROM 20B or the storage 20D to execute the program by using the RAM 20C as a work region. The CPU 20A performs control of each of the configurations and various types of calculation processing in accordance with the program recorded in the ROM 20B or the storage 20D.

The ROM 20B stores various programs and various types of data. The RAM 20C temporarily stores, as the work region, the program or the data. The storage 20D is configured by a storage device such as a hard disk drive (HDD) or a solid state drive (SSD), and stores various programs and various types of data. The communication I/F 20E is an interface for communicating with other devices.

Fig. 3 is a block diagram showing an example of the functional configuration of the server 20. The server 20 has a job reception unit 201, a comparison unit 202, a job allocation unit 203, a display control unit 204, and a list update unit 205 as functional configurations. The job reception unit 201, the comparison unit 202, the job allocation unit 203, the display control unit 204, and the list update unit 205 are realized by the CPU 20A reading out and executing the program stored in the ROM 20B.

The job reception unit 201 receives, via the communication line 15, a job generated by the operation terminal 17 based on information input to the operation terminal 17 by an operator (not shown) of the printing company. The operation terminal 17 has the same hardware configuration as the server 20. The job includes, for example, a printing condition in a case where a printing apparatus (image forming apparatus) 32 of the printing unit 30 prints on printing paper (recording medium). The printing condition includes, for example, information regarding print data representing a print content, a type of printing paper, a dimension of printing paper, and the number of pieces of printing paper subjected to printing processing.

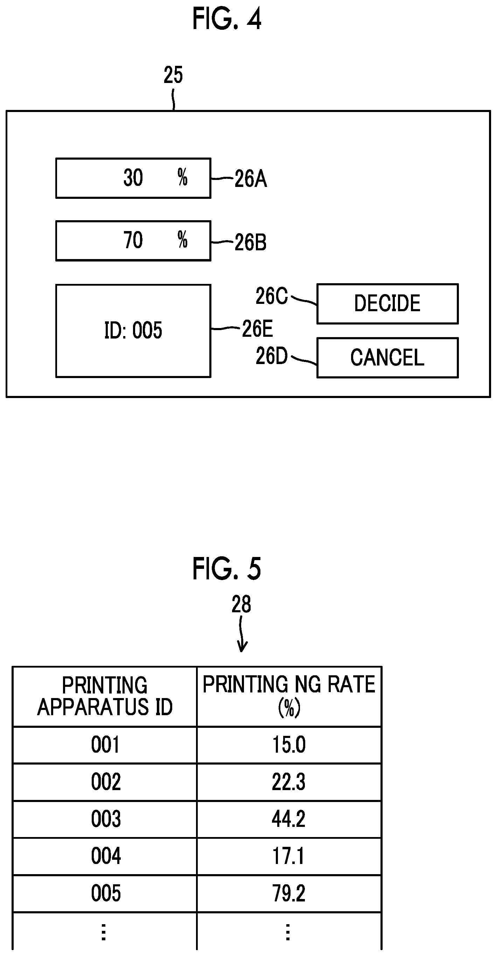

Information input to the server 20 by the input device 24 as shown in Fig. 4 is displayed on the display device 25. The display device 25 displays a first threshold value display unit 26A, a second threshold value display unit 26B, a deciding unit 26C, a cancel operation unit 26D, and a warning unit 26E.

The operator can input information regarding a first threshold value to the server 20 by using the input device 24. The first threshold value is a value associated with the job received from the operation terminal 17, and is a threshold value related to a printing NG rate of each printing apparatus 32. Here, the printing NG rate is a ratio of a printed matter that does not satisfy a printing criterion to all printed matters generated by respective printing apparatuses 32 and subjected to inspection described below. That is, the printing NG rate is a rejection ratio of the printing paper. This printing criterion is a criterion that can be determined by an inspection apparatus (determination apparatus) 36 of the printing unit 30. Fig. 4 shows the first threshold value display unit 26A in a case where "30%" is set as the first threshold value.

The operator can input information regarding a second threshold value to the server 20 by using the input device 24. This second threshold value is also a threshold value related to the printing NG rate of the printing apparatus 32. However, the second threshold value is a value larger than the first threshold value. Fig. 4 shows the second threshold value display unit 26B in a case where "70%" is set as the second threshold value. In general, in a case where the operator has a quality requirement for the printed matter generated by the printing apparatus 32, the operator sets the first threshold value and the second threshold value. On the other hand, in a case where the operator does not have the quality requirement for the printed matter, the operator does not set the first threshold value and the second threshold value.

In a case where the first threshold value and the second threshold are set for the received job, the comparison unit 202 executes comparison processing of comparing the first threshold value and the second threshold value input using the input device 24 with the NG rate list 28 (refer to Fig. 5) recorded in the storage 20D. The NG rate list 28 includes ID information representing each printing apparatus 32 and information regarding the printing NG rate corresponding to each ID. Further, the comparison unit 202 generates comparison information which is information regarding a comparison result. In a case where the first threshold value and the second threshold value are not set for the received job, the comparison unit 202 does not execute the comparison processing.

In a case where the operator executes deciding processing using the input device 24, a color of the deciding unit 26C is changed by the control of the display control unit 204. On the other hand, in a case where the operator executes cancel processing using the input device 24, a color of the cancel operation unit 26D is changed by the control of the display control unit 204, and the display control unit 204 erases the information input using the input device 24 from the server 20.

In a case where the comparison unit 202 does not generate the comparison information and the deciding processing is executed, the job allocation unit 203 executes normal allocation processing which is allocation processing in a normal case. In this case, all the printing apparatuses 32 may be job allocation targets. For example, the job allocation unit 203 transmits the job to one or the plurality of printing apparatuses 32 based on a set priority order by using the communication I/F 20E and the communication line 15.

On the other hand, in a case where the comparison unit 202 generates the comparison information and the deciding processing is executed, the job allocation unit 203 executes special allocation processing which is allocation processing in a special case. In this case, only the printing apparatus 32 having the printing NG rate equal to or less than the first threshold value, which is displayed on the first threshold value display unit 26A, may be the job allocation target. For example, the job allocation unit 203 transmits, based on the set priority order, the job to one or the plurality of printing apparatuses 32 having the printing NG rate equal to or less than the first threshold value, using the communication I/F 20E and the communication line 15.

The display control unit 204 controls the display device 25. For example, in a case where the input using the input device 24 is operated as described above, the display control unit 204 causes the first threshold value display unit 26A, the second threshold value display unit 26B, the deciding unit 26C, and the cancel operation unit 26D to execute the display operation described above.

In a case where the comparison information generated by the comparison unit 202 represents that the printing apparatus 32 having the printing NG rate equal to or larger than the second threshold value is present, the display control unit 204 causes the warning unit 26E of the display device 25 to display the ID information of the printing apparatus 32 having this printing NG rate. That is, the display control unit 204 issues a warning command to the warning unit 26E. Fig. 4 shows that the printing NG rate of the printing apparatus 32 having the ID of "005" is equal to or larger than the second threshold value.

The list update unit 205 calculates the printing NG rate of the printing apparatus 32 based on a first calculation element and a second calculation element, which will be described below, received from the inspection apparatus 36 by the server 20. Here, the first calculation element is all the number of sheets of printing paper printed by the printing apparatus 32 up to a current time point. The second calculation element is the number of sheets of printing paper on which the printing processing is executed by the printing apparatus 32, which is determined by the inspection apparatus 36 to not satisfy the printing criterion up to the current time point. That is, the list update unit 205 divides the second calculation element by the first calculation element to calculate the printing NG rate of each printing apparatus 32. Further, the list update unit 205 updates the NG rate list 28 by using the latest printing NG rate.

As shown in Fig. 1, each printing unit 30 has the printing apparatus 32 and the inspection apparatus 36.

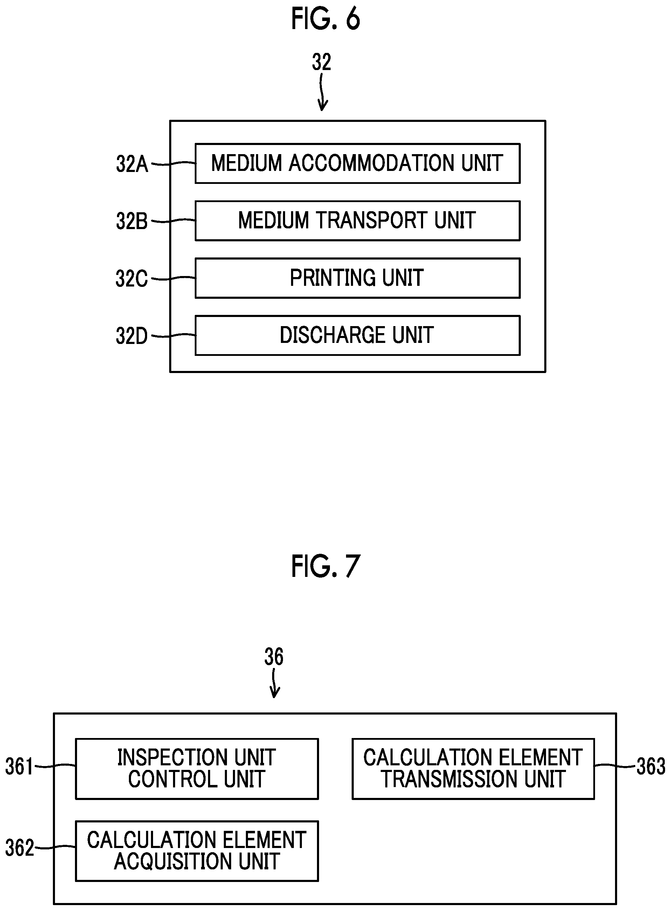

The printing apparatus 32 is an apparatus that performs the printing processing on the printing paper in a case where the job is received from the server 20. As shown in Fig. 6, the printing apparatus 32 includes a medium accommodation unit 32A, a medium transport unit 32B, a printing unit 32C, and a discharge unit 32D.

The medium accommodation unit 32A can accommodate a large number of sheets of printing paper. The medium transport unit 32B transports the printing paper accommodated in the medium accommodation unit 32A to the printing unit 32C. The printing unit 32C performs the printing processing on the printing paper transported by the medium transport unit 32B. In other words, the printing unit 32C is an execution unit that executes the job. The printing processing by the printing unit 32C includes, for example, each step of charging, exposure, development, transfer, and fixing. The discharge unit 32D discharges each sheet of printing paper printed by the printing unit 32C from the printing apparatus 32. Each printing apparatus 32 may be an inkjet or offset printing apparatus.

The inspection apparatus 36 executes inspection processing for each sheet of printing paper discharged from the printing apparatus 32. The inspection apparatus 36 has an inspection unit (not shown) that executes the inspection processing. The inspection unit determines whether or not each sheet of printing paper sent from the printing apparatus 32 satisfies the printing criterion by using information regarding the printing criterion recorded in a storage 36D described below. This printing criterion is, for example, a tint criterion. For example, the inspection apparatus 36 determines whether or not each sheet of printing paper satisfies the printing criterion by using the print data included in the job received from the server 20, the printing paper sent from the printing apparatus 32, and the printing criterion.

As shown in Fig. 2, the inspection apparatus 36 is configured to include, as a hardware configuration, a CPU 36A, a ROM 36B, a RAM 36C, the storage 36D, a communication I/F 36E, and an input/output I/F 36F. The CPU 36A, the ROM 36B, the RAM 36C, the storage 36D, the communication I/F 36E, and the input/output I/F 36F are connected to be able to communicate with each other via a bus 36Z.

Fig. 7 shows an example of a functional configuration of the inspection apparatus 36 in a block diagram. The inspection apparatus 36 has, as the functional configuration, an inspection unit control unit 361, a calculation element acquisition unit 362, and a calculation element transmission unit 363. The inspection unit control unit 361, the calculation element acquisition unit 362, and the calculation element transmission unit 363 are realized by the CPU 36A reading out and executing a program stored in the ROM 36B.

The inspection unit control unit 361 controls the inspection unit.

The calculation element acquisition unit 362 acquires the first calculation element and the second calculation element of the corresponding printing apparatus 32 based on the inspection result of the inspection unit. Further, the calculation element acquisition unit 362 records the latest first and second calculation elements in the storage 36D.

The calculation element transmission unit 363 transmits, for each data update cycle, the latest first and second calculation elements recorded in the storage 36D to the server 20 by using the communication I/F 36E and the communication line 15.

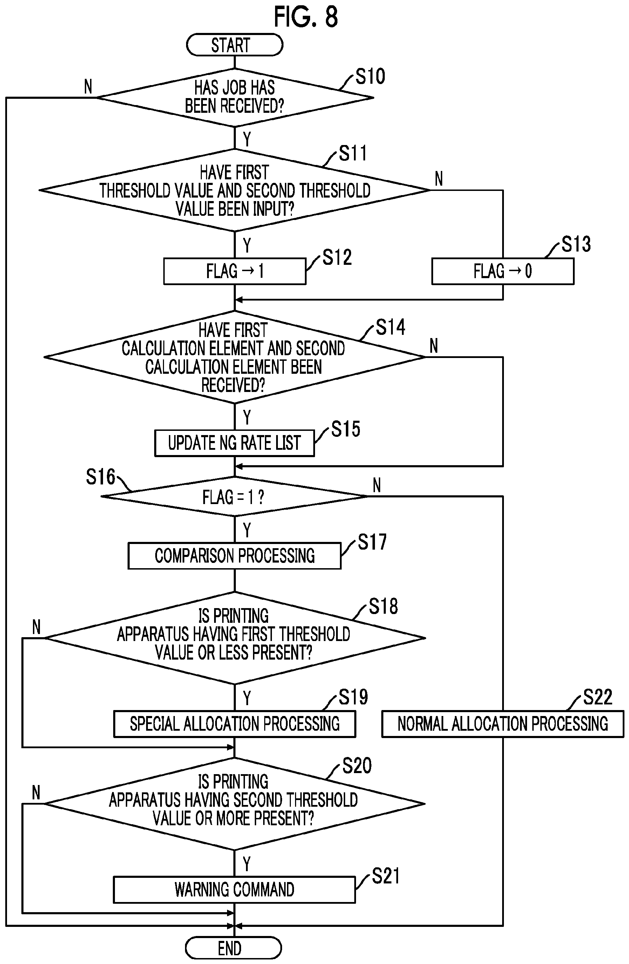

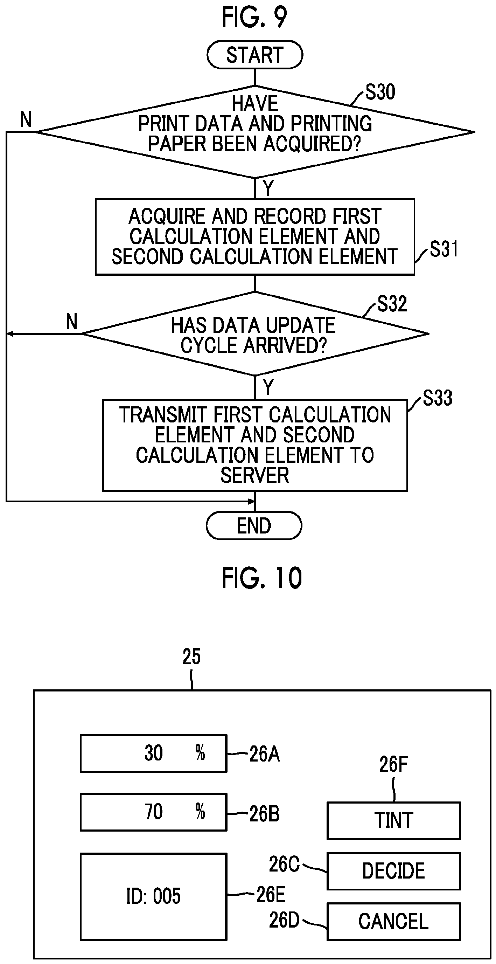

Next, an action of the image forming system 10 having the above configuration will be described with reference to flowcharts of Figs. 8 and 9.

First, processing of the flowchart of Fig. 8 will be described. The CPU 20A of the server 20 repeatedly executes the processing of the flowchart of Fig. 8 for each calculation cycle.

First, in step S10 (hereinafter text of step is omitted), the CPU 20A determines whether or not the job has been received from the operation terminal 17.

In a case where the determination is Yes in S10, the CPU 20A proceeds to S11 and determines whether or not the first threshold value and the second threshold value related to the received job have been input.

In a case where the determination is Yes in S11, the CPU 20A proceeds to S12 and sets a value of a flag to "1". An initial value of the flag is "0".

On the other hand, in a case where the determination is No in S11, the CPU 20A proceeds to S13 and sets the value of the flag to "0".

In a case where the processing of S12 or S13 is ended, the CPU 20A proceeds to S14 and determines whether or not the first calculation element and the second calculation element have been received from any one of the inspection apparatuses 36.

In a case where the determination is Yes in S14, the CPU 20A proceeds to S15, calculates the printing NG rate, and updates the NG rate list 28. That is, the CPU 20A updates the printing NG rate of the printing apparatus 32 corresponding to the inspection apparatus 36 that has transmitted the first calculation element and the second calculation element to the server 20.

In a case where the determination is No in S 14 or in a case where the processing of S15 is ended, the CPU 20A proceeds to S16 and determines whether or not the value of the flag is "1".

In a case where the determination is Yes in S16, the CPU 20A proceeds to S17 and executes the comparison processing. That is, the CPU 20A compares the first threshold value and the second threshold value input using the input device 24 with the NG rate list 28.

In a case where the processing of S17 is ended, the CPU 20A proceeds to S18 and determines whether or not the printing apparatus 32 having the printing NG rate equal to or less than the first threshold value is present, based on the result of the comparison processing. For example, in a case where the first threshold value is 30%, the printing NG rates of the printing apparatuses 32 having the printing apparatus IDs 001, 002, and 004 are equal to or less than the first threshold value.

In a case where the determination is Yes in S18, the CPU 20A proceeds to S19 and executes the special allocation processing. For example, in a case where the printing NG rates of the printing apparatuses 32 having the printing apparatus IDs 001, 002, and 004 are equal to or less than the first threshold value, the CPU 20A transmits the job to the printing apparatuses 32 having the printing apparatus IDs 001 and 002 in accordance with the above priority order. Therefore, in this case, the printing apparatuses 32 having the printing apparatus IDs 001 and 002 execute the printing processing based on this job, and respective inspection apparatuses 36 corresponding to these printing apparatuses 32 execute the inspection processing. For example, in a case where the information regarding the number of sheets of printing paper included in the job represents "100", the CPU 20A causes the printing apparatus 32 having the printing apparatus ID 001 to execute the printing processing on 30 sheets of printing paper and causes the printing apparatus 32 having the printing apparatus ID 002 to execute the printing processing on 70 sheets of printing paper.

In a case where the determination is No in S18 or in a case where the processing in S19 is ended, the CPU 20A proceeds to S20 and determines whether or not the printing apparatus 32 having the printing NG rate equal to or larger than the second threshold value is present, based on the result of the comparison processing. For example, in a case where the second threshold value is 70%, the printing NG rate of the printing apparatus 32 having the printing apparatus ID 005 is equal to or larger than the second threshold value.

In a case where the determination is Yes in S20, the CPU 20A proceeds to S21 and causes the warning unit 26E to display information regarding the printing apparatus ID representing the printing apparatus 32 having the printing NG rate equal to or larger than the second threshold value.

On the other hand, in a case where the determination is No in S16, the CPU 20A proceeds to S22 and executes the normal allocation processing. For example, the CPU 20A transmits the job to the printing apparatuses 32 having the printing apparatus IDs 004 and 005 in accordance with the above priority order. Therefore, in this case, the printing apparatuses 32 having the printing apparatus IDs 004 and 005 execute the printing processing based on this job, and respective inspection apparatuses 36 corresponding to these printing apparatus 32 execute the inspection processing. For example, in a case where the information regarding the number of sheets of printing paper included in the job represents "100", the CPU 20A causes the printing apparatus 32 having the printing apparatus ID 004 to execute the printing processing on 50 sheets of printing paper and causes the printing apparatus 32 having the printing apparatus ID 005 to execute the printing processing on 50 sheets of printing paper.

In a case where the determination is No in S10 or in a case where the pieces of processing of S21 and S22 are ended, the CPU 20A temporarily ends the processing of the flowchart of Fig. 8.

Next, processing of the flowchart of Fig. 9 will be described. The CPU 36A of each inspection apparatus 36 repeatedly executes the processing of the flowchart of Fig. 9 for each calculation cycle.

First, in S30, the CPU 36A determines whether or not the print data and the printing paper have been acquired.

In a case where the determination is Yes in S30, the CPU 36A proceeds to S31 and determines whether or not each sheet of acquired printing paper satisfies the printing criterion by using the print data, the printing paper, and the printing criterion. Further, the CPU 36A acquires the first calculation element and the second calculation element of the corresponding printing apparatus 32 and records the latest first and second calculation elements in the storage 36D.

In a case where the processing of S31 is ended, the CPU 36A proceeds to S32 and determines whether or not the data update cycle has arrived.

In a case where the determination is Yes in S32, the CPU 36A proceeds to S33 and transmits the latest first and second calculation elements recorded in the storage 36D to the server 20.

In a case where the determination is No in S30 and 32 or in a case where the processing of S33 is ended, the CPU 36A temporarily ends the processing of the flowchart of Fig. 9.

As described above, in the image forming system 10 of the present exemplary embodiment, the operator who is a printing requester can select the printing apparatus 32, from the plurality of printing apparatuses 32, that executes the printing processing by the use of the first threshold value input to the server 20 using the input device 24. That is, the operator causes only the printing apparatus 32 having the printing NG rate equal to or less than the first threshold value set by using the input device 24 to execute the printing processing. The printing apparatus 32 having the printing NG rate equal to or less than the first threshold value is considered to hardly generate the printed matter that does not satisfy the printing criterion (quality criterion) required by the operator. Therefore, in the image forming system 10, the printed matter that does not satisfy the printing criterion required by the printing requester is hardly generated, as compared with a case where all the printing apparatuses 32 included in the image forming system 10 are used to generate the printed matter. In other words, the image forming system 10 can reduce the number of printed matters subj ected to discard processing due to the fact that the printing criterion is not satisfied.

Further, the image forming system 10 causes the plurality of printing apparatuses 32 to execute the printing processing regardless of whether the first threshold value and the second threshold value are set or are not set for the job. Therefore, the image forming system 10 can generate a large number of printed matters in a short time, as compared with a case where only one printing apparatus 32 is caused to execute the printing processing.

Further, the operator who uses the image forming system 10 can set the magnitude of the first threshold value by using the input device 24. Further, since the image forming system 10 causes the first threshold value display unit 26A of the display device 25 to display the input first threshold value, the operator is made to recognize the set magnitude of the first threshold value.

Further, the operator who uses the image forming system 10 can set the magnitude of the second threshold value by using the input device 24. Further, since the image forming system 10 causes the second threshold value display unit 26B of the display device 25 to display the input second threshold value, the operator is made to recognize the set magnitude of the second threshold value.

Further, the image forming system 10 causes the warning unit 26E of the display device 25 to display the ID information of the printing apparatus 32 having the rejection ratio equal to or larger than the second threshold value. That is, the image forming system 10 can specify a specific image forming apparatus that is the printing apparatus 32 having the rejection ratio equal to or larger than the second threshold value. In other words, the image forming system 10 can specify the printing apparatus 32 having the rejection ratio that is too high to withstand practical use.

Further, since the ID information of the printing apparatus 32 having the rejection ratio equal to or larger than the second threshold value is displayed on the warning unit 26E, the operator can recognize the printing apparatus 32 having the rejection ratio equal to or larger than the second threshold value.

Further, in the image forming system 10, the server 20 calculates the printing NG rate based on the first calculation element and the second calculation element received from each inspection apparatus 36. Therefore, the image forming system 10 can reduce the burden on the operator, as compared with a case where the operator inputs the information regarding the rejection ratio to the server 20 by using the input device 24. In this manner, the operator does not need to determine whether or not the printing processing performed on the printing paper satisfies the printing criterion. Therefore, even an operator having a short work experience can operate the image forming system 10 such that the printed matter that does not satisfy the printing criterion required by the operator is hardly generated and a large number of printed matters is generated in a short time.

The image forming system 10 according to the present exemplary embodiment has been described above with reference to the drawings, but the image forming system 10 according to the present exemplary embodiment is not limited to the image forming system shown in the drawings and the design of the image forming system 10 can be changed as appropriate without departing from the scope of the present invention.

For example, the present invention may be implemented in an aspect of a modification example shown in Fig. 10. In this modification example, the operator who is the printing requester can select the printing criterion from a plurality of criteria. That is, the display device 25 includes a printing criterion display unit 26F. The operator can select one criterion, as the printing criterion, from the plurality of criteria by using the input device 24. For example, the printing criterion includes the tint criterion, a blurring criterion, and a printing position criterion. For example, in a case where the operator selects the tint criterion as the printing criterion, a text "tint" is displayed on the printing criterion display unit 26F as shown in Fig. 10.

The inspection unit of each inspection apparatus 36 executes the determination processing of whether or not all the sheets of printing paper received from the printing apparatus 32 satisfy the tint criterion, the blurring criterion, and the printing position criterion. Further, the calculation element acquisition unit 362 acquires the first calculation element and the second calculation element of the corresponding printing apparatus 32 for each of the three criteria (color tint criterion, blurring criterion, and printing position criterion) based on the inspection result of the inspection unit, and records the first calculation element and the second calculation element for each of the three criteria in the storage 36D. Further, the calculation element transmission unit 363 transmits, for each data update cycle, the latest first and second calculation elements for each of the three criteria recorded in the storage 36D to the server 20 by using the communication I/F 36E and the communication line 15.

The server 20, which has received the first calculation element and the second calculation element for each of the three criteria from each inspection apparatus 36, calculates the latest printing NG rate for each of the three criteria and updates the NG rate list 28. Further, the server 20 executes the comparison processing by using the latest printing NG rate. For example, in a case where the operator selects the tint criterion as the printing criterion, the CPU 20A compares the first threshold value and the second threshold value input by using the input device 24 with the NG rate list 28 of the tint criterion.

According to this modification example, a content of the printing criterion is caused to easily match a content required by the operator, as compared with a case where the printing criterion does not include a plurality of tint criteria, the blurring criteria, and the printing position criteria. Further, the content of the printing criterion is caused to easily match a content required by the printing requester, as compared with a case where the printing criterion includes only one criterion. Therefore, the content of the printing processing executed on the printing paper is easily brought closer to the content wanted by the operator, as compared with the above-described exemplary embodiment.

The job may be transmitted only to the printing apparatus 32 in which at least one printing criterion is equal to or less than the first threshold value. For example, in a case where the printing NG rate of the tint criterion of the printing apparatus 32 having the ID 001 is equal to or less than the first threshold value, the printing NG rate of the blurring criterion of the printing apparatus 32 having the ID 002 is equal to or less than the first threshold value, and the printing NG rate of the printing position criterion of the printing apparatus 32 having the ID 003 is equal to or less than the first threshold value, the server 20 may transmit the job to the printing apparatuses 32 having IDs 001, 002, and 003.

Similarly, the ID information of the printing apparatus 32 in which at least one printing criterion is equal to or larger than the second threshold value may be displayed on the warning unit 26E.

Further, the job may be transmitted only to the printing apparatus 32 in which the plurality of criteria are equal to or less than the first threshold value. For example, the job may be transmitted only to the printing apparatus 32 in which both the tint criterion and the blurring criterion are equal to or less than the first threshold value. Further, the job may be transmitted only to the printing apparatus 32 in which all the tint criterion, the blurring criterion, and the printing position criterion are equal to or less than the first threshold value.

Similarly, the ID information of the printing apparatus 32 in which the plurality of printing criteria are equal to or larger than the second threshold value may be displayed on the warning unit 26E.

The printing criterion may include a criterion different from the tint criterion, the blurring criterion, and the printing position criterion.

The printing apparatus 32 may perform the printing processing on a recording medium different from the printing paper.

Each inspection apparatus 36 may calculate the printing NG rate of the corresponding printing apparatus 32 based on the first calculation element and the second calculation element, and transmit this printing NG rate to the server 20.

The printing criterion may include only the tint criterion and the blurring criterion.

### (Supplementary Notes)

(((1))) An information processing system comprising:
   a processor configured to:
   receive information regarding a first threshold; and
   cause, based on information regarding a rejection ratio which is a ratio of printed matters not satisfying a printing criterion each image forming apparatus has and the first threshold, the image forming apparatus in which the rejection ratio is equal to or less than the first threshold value to execute a printing operation.
(((2))) The information processing system according to (((1))),
   wherein the printing criterion includes a plurality of criteria whose content is different from each other, and
   the processor is configured to cause, based on the information regarding the rejection ratio corresponding to at least one selected criterion and the first threshold value, the image forming apparatus in which the rejection ratio is equal to or less than the first threshold value to execute the printing operation.
(((3)))
   The information processing system according to (((1))) or (((2))),
   wherein the plurality of criteria includes a tint criterion and a blurring criterion.
(((4))) The information processing system according to any one of (((1))) to (((3))),
   wherein the printing criterion includes at least one of a tint criterion, a blurring criterion, or a printing position criterion.
(((5))) The information processing system according to any one of (((1))) to (((4))), wherein the processor is configured to:
   cause, in a case where the information regarding the first threshold value is input by using an input device, a display unit to display the input information regarding the first threshold value.
(((6))) The information processing system according to any one of (((1))) to (((5))), wherein the processor is configured to:
   cause, in a case where information regarding a second threshold value having the rejection ratio larger than the first threshold value is input by using the input device, the display unit to display the input information regarding the second threshold value.
(((7))) The information processing system according to any one of (((1))) to (((6))), wherein the processor is configured to:
   recognize the image forming apparatus having the rejection ratio equal to or larger than the second threshold value as a specific image forming apparatus.
(((8))) The information processing system according to any one of (((1))) to (((7))), wherein the processor is configured to:
   cause the display unit to display information regarding the specific image forming apparatus.
(((9))) The information processing system according to any one of (((1))) to (((8))), wherein the processor is configured to:
   receive information regarding a determination result from a determination apparatus that determines whether or not the printed matters satisfy the printing criterion, and
   the information regarding the determination result is the information regarding the rejection ratio or information in which the processor is configured to calculate the information regarding the rejection ratio.
(((10))) An image forming system comprising:
   the information processing system according to any one of (((1))) to (((9)));
   a plurality of the image forming apparatuses configured to execute the printing operation; and
   a determination apparatus that determines whether or not the printed matters satisfy the printing criterion and that transmits a determination result to the information processing system.

With the information processing system according to (((1))), the printed matter that does not satisfy the printing criterion required by the printing requester is hardly generated, as compared with a case where the printed matter is generated by using all of the plurality of image forming apparatuses.

With the information processing system according to (((2))), the content of the printing criterion is caused to easily match the content required by the printing requester, as compared with a case where the printing criterion includes only one criterion.

With the information processing system according to (((3))), the contents of the printing criteria related to the tint criterion and the blurring criterion are caused to easily match the content required by the printing requester, as compared with a case where the printing criterion does not include the tint criterion and the blurring criterion.

With the information processing system according to (((4))), the content of the printing criterion related to at least one of the tint criterion, the blurring criterion, or the printing position criterion is caused to easily match the content required by the printing requester, as compared with a case where the printing criterion does not include the tint criterion, the blurring criterion, and the printing position criterion.

With the information processing system according to (((5))), the printing requester can set the magnitude of the first threshold value and can recognize the set magnitude of the first threshold value.

With the information processing system according to (((6))), the printing requester can set the magnitude of the second threshold value larger than the first threshold value and can recognize the set magnitude of the second threshold value.

With the information processing system according to (((7))), the image forming apparatus in which the rejection ratio is equal to or larger than the second threshold value can be specified.

With the information processing system according to (((8))), the printing requester can recognize the specific image forming apparatus.

With the information processing system according to (((9))), the burden on the operator is reduced, as compared with a case where the operator inputs the information regarding the rejection ratio using the input device connected to the processor.

With the image forming system according to (((10))), the printed matter that does not satisfy the printing criterion required by the printing requester is hardly generated, as compared with a case where the printed matter is generated by using all of the plurality of image forming apparatuses.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming system
20: server (information processing system)
20A: CPU (processor)
25: display device (display unit)
32: printing apparatus (image forming apparatus)
36: inspection apparatus (determination apparatus)

## Claims

1. An information processing system comprising:
a processor configured to:
receive information regarding a first threshold; and
cause, based on information regarding a rejection ratio which is a ratio of printed matters not satisfying a printing criterion each image forming apparatus has and the first threshold, the image forming apparatus in which the rejection ratio is equal to or less than the first threshold value to execute a printing operation.

2. The information processing system according to claim 1,
wherein the printing criterion includes a plurality of criteria whose content is different from each other, and
the processor is configured to:
cause, based on the information regarding the rejection ratio corresponding to at least one selected criterion and the first threshold value, the image forming apparatus in which the rejection ratio is equal to or less than the first threshold value to execute the printing operation.

3. The information processing system according to claim 1 or 2,
wherein the plurality of criteria includes a tint criterion and a blurring criterion.

4. The information processing system according to any one of claims 1 to 3,
wherein the printing criterion includes at least one of a tint criterion, a blurring criterion, or a printing position criterion.

5. The information processing system according to any one of claims 1 to 4, wherein the processor is configured to:
cause, in a case where the information regarding the first threshold value is input by using an input device, a display unit to display the input information regarding the first threshold value.

6. The information processing system according to any one of claims 1 to 5, wherein the processor is configured to:
cause, in a case where information regarding a second threshold value having the rejection ratio larger than the first threshold value is input by using the input device, the display unit to display the input information regarding the second threshold value.

7. The information processing system according to any one of claims 1 to 6, wherein the processor is configured to:
recognize the image forming apparatus having the rejection ratio equal to or larger than the second threshold value as a specific image forming apparatus.

8. The information processing system according to any one of claims 1 to 7, wherein the processor is configured to:
cause the display unit to display information regarding the specific image forming apparatus.

9. The information processing system according to any one of claims 1 to 8, wherein the processor is configured to:
receive information regarding a determination result from a determination apparatus that determines whether or not the printed matters satisfy the printing criterion, and
the information regarding the determination result is the information regarding the rejection ratio or information in which the processor is configured to calculate the information regarding the rejection ratio.

10. An image forming system comprising:
the information processing system according to any one of claims 1 to 9;
a plurality of the image forming apparatuses configured to execute the printing operation; and
a determination apparatus that determines whether or not the printed matters satisfy the printing criterion and that transmits a determination result to the information processing system.
